# EUROPÄISCHE PATENTSCHRIFT

(11) **EP 3 343 186 B1**
(45) Veröffentlichungstag und Bekanntmachung des Hinweises auf die Patenterteilung: **14.12.2022**
(21) Anmeldenummer: 17401129.6
(22) Anmeldetag: 20.12.2017
(51) Int. Cl.: G05D 7/06, F04B 43/09, G01F 23/22, D06F 33/00

(54) **DOSIEREINRICHTUNG UND VERFAHREN ZUM BETREIBEN EINER DOSIEREINRICHTUNG**
DOSING DEVICE AND METHOD FOR OPERATING SAME
DISPOSITIF DE DOSAGE ET SON PROCÉDÉ DE FONCTIONNEMENT

(30) Priorität: 30.12.2016 DE 102016125928
(43) Veröffentlichungstag der Anmeldung: 04.07.2018
(73) Patentinhaber: Saier, Beatrice, 79117 Freiburg / Kappel (DE); Saier, Michael, 79117 Freiburg / Kappel (DE)
(72) Erfinder: SAIER, Michael, 79117 Freiburg/Kappel (DE); QUELLMALZ, Andreas, 67466 Lambrecht (DE)
(74) Vertreter: Roche, von Westernhagen & Ehresmann

(56) Entgegenhaltungen:
- WO-A1-03/054558
- WO-A1-2009/095003
- DE-A1-102015 107 976

## Beschreibung

Die Erfindung betrifft zunächst eine Dosiereinrichtung mit einer Steuerung und mit einer Pumpe zum Fördern wenigstens eines Mediums entlang einer Förderleitung von wenigstens einem Einlass zu wenigstens einem Auslass unter Zuhilfenahme der Pumpe, die von der Steuerung ansprechbar ist.

Derartige Dosiereinrichtungen werden von den Anmeldern und dem mit diesen verbundenen Unternehmen, der Herbert Saier GmbH, seit Jahrzehnten entwickelt und gefertigt.

Gattungsgemäße Dosiereinrichtungen, die auf die Anmelder zurückgehen, sind beispielsweise in den deutschen Patentanmeldungen DE 10 2011 108 396 A1, DE 10 2011 119 021 A1, DE 10 2011 122 921 A1, DE 10 2012 012 913 A1, DE 10 2013 008 973 A1, DE 10 2013 022 329 A1, DE 10 2014 002 560 A1, DE 10 2014 010 126 A1, DE 10 2015 110 862 A1, DE 10 2015 107 105 A1, DE 10 2015 107 976 A1, DE 10 2015 122 565 A1, DE 10 2016 102 829 A1 und DE 10 2016 121 383 A1 beschrieben.

Dosiereinrichtungen der gattungsgemäßen Art können Medien, z. B. Wasser oder Prozesschemikalien, beispielsweise von Gefäßen oder Behältnissen, in denen die entsprechenden Medien aufbewahrt werden, zu Zielgeräten hin, beispielsweise hin zu einer Spülmaschine oder zu einer Waschmaschine hin fördern. Hierfür ist in der Dosiereinrichtung jeweils eine Pumpe vorgesehen, die die Förderung bewirkt. Es kann sich dabei beispielsweise um Schlauchpumpen, aber auch um andere geeignete Pumpen handeln.

Die Pumpe ist von einer Steuerung ansprechbar und kann in Folge eines solchen Ansprechvorganges für eine vorgegebene Zeitdauer das Medium entlang einer Förderleitung vom Einlass zum Auslass fördern. Im Falle einer als Schlauchpumpe ausgebildete Pumpe kann die Steuerung im Zuge der Durchführung eines Dosierprozesses beispielsweise veranlassen, dass der Rotor der Schlauchpumpe eine bestimmte Anzahl von Umdrehungen vollführt, oder für eine bestimmte Zeitdauer eine Förderung vornimmt.

Im Zuge der Durchführung von Dosierprozessen ist insbesondere bei einigen Anwendungen gewünscht, in Erfahrung zu bringen, welche Dosiervolumina tatsächlich gefördert werden. Hierzu ist es bekannt, Durchflussmessgeräte, sogenannte Flowmeter, einzusetzen. Diese arbeiten allerdings teilweise nicht zufriedenstellend, und sind mit Ungenauigkeiten und Messunsicherheiten behaftet.

Aus der WO 03/054558 A1 geht eine Schlauchpumpe mit einem Sensor hervor, der die Anwesenheit eines flüssigen Mediums feststellen kann. Gemäß dem Ausführungsbeispiel der Fig. 7 dieses Dokumentes kann der Sensor auch stromabwärts der Pumpe angeordnet sein. Wenn der Sensor einen Leerstand feststellt, kann er ein optisches oder akustisches Warnsignal generieren, Die Druckschrift offenbart nicht, dass der Sensor mit einer Steuerung der Dosiereinrichtung verbunden ist. Aus der Druckschrift geht auch nicht hervor, dass eine Steuerung im Rahmen eines Kalibrierungsprozesses eine Messung zwischen Beginn und Ende einer Förderung eines Depot-Volumens vornimmt,

Aus der DE 10 2015 107 976 A1 der Anmelder geht eine Dosiereinrichtung hervor, die über eine Fluidleitung mit einem Zielgerät verbunden ist. In dem Zielgerät ist ein Detektor angeordnet, mit dem die Anwesenheit von Medium in dem Zielgerät detektiert werden kann. Der Druckschrift ist nicht zu entnehmen, dass ein Leerstandsensor stromabwärts der Pumpe der Dosiereinrichtung angeordnet wird. Der Druckschrift ist auch nicht zu entnehmen, dass ein Leerstand in einer Förderleitung der Dosiereinrichtung detektierbar ist. Schließlich ist der Detektor nicht mit einer Steuerung der Dosiereinrichtung verbunden. Zu guter Letzt ist der Druckschrift auch nicht zu entnehmen, dass eine Steuerung der Dosiereinrichtung im Rahmen eines Kalibrierungsprozesses durch Vornahme einer Messung einer Zeitdauer oder eines anderen Parameters zwischen Beginn und Ende einer Förderung eines Depot-Volumens eine Information über die Förderleistung der Pumpe ermitteln kann.

Ausgehend von einer eingangs beschriebenen Dosiereinrichtung besteht die Aufgabe der Erfindung darin, die bekannte Dosiereinrichtung derartig weiterzubilden, dass eine Verbesserung des Dosierprozesses möglich wird.

Die Erfindung löst diese Aufgabe mit den Merkmalen des Anspruches 1.

Das Prinzip der Erfindung besteht also im Wesentlichen darin, dass ein Leerstandssensor vorgesehen ist. Ein Leerstandssensor ist ein Detektor, oder allgemein gesprochen, eine Einrichtung, mit der ein Leerstand - also eine Abwesenheit eines Mediums - in der Förderleitung detektierbar ist. Dieser Leerstandssensor ist stromabwärts der Pumpe angeordnet, insbesondere unmittelbar stromabwärts der Pumpe angeordnet.

Der Leerstandssensor kann beispielsweise als optischer Sensor ausgebildet sein, und eine Feststellung gewährleisten, ob sich in der Förderleitung, an der Stelle, an der der Leerstandssensor eine Messung vornimmt, flüssiges Medium befindet - unabhängig davon, ob es sich um eine Prozesschemikalie oder ein Spülmittel, insbesondere Wasser, handelt - oder stattdessen Luft befindet.

Der Leerstandssensor kann also die Abwesenheit von Medien unmittelbar abwärts der Pumpe detektieren. Hierdurch kann, insbesondere durch Generierung eines Leerstandssignals an die Steuerung, an diese das Signal und die Information übermittelt werden, dass sich stromabwärts der Pumpe Luft befindet.

Diese Information kann von der Steuerung auf vielfältige Weise verwendet bzw. weiter verarbeitet werden.

So kann gemäß einer ersten Variante der Erfindung, die insbesondere vorteilhaft bei Dosiereinrichtungen Anwendung finden kann, die mehrere Einlässe aufweisen, nach Erhalt eines Leerstandssignals an die Steuerung von dieser ein Warnsignal generiert werden, dass eine bestimmte Prozesschemikalie zur Neige gegangen ist, und eines Austausches bedarf. Eine Bedienperson kann auf diese Weise unverzüglich eine Anweisung erhalten, ein neues Gebinde an den entsprechenden Eingang der Dosiereinrichtung anzuschließen.

Gemäß einer weiteren Variante der Erfindung kann die Dosiereinrichtung über ein Depot mit einem definierten Depotvolumen verfügen, bzw. kann der Dosiereinrichtung ein solches Depot zugeordnet sein. Wenn die Steuerung eine Förderung des Depotvolumens - welches also an sich genau bekannt ist - initiiert, und sodann unter Zuhilfenahme des Leerstandssensors den Moment erkennt, zu dem das gesamte Depotvolumenen gefördert worden ist - weil nachfolgend ein Leerstand stromabwärts der Pumpe detektiert werden kann -, kann die Steuerung aus der Zeitdauer zwischen dem Beginn und dem Ende der Förderung durch die Pumpe beispielsweise die Förder- oder Leistungsfähigkeit oder die Förderleistung der Pumpe ermitteln. Auf diese Weise kann die Dosiereinrichtung kalibriert werden, bzw. regelmäßig neu nachgestellt oder nachjustiert werden. So können beispielsweise auch temperaturabhängige oder alterungsabhängige Einflüsse auf die Dosiereinrichtung, wie beispielsweise eine Schlauchalterung, kompensiert bzw. ausgeglichen werden.

Ein Leerstandssensor im Sinne der vorliegenden Erfindung ist ein denkbar einfach ausgebildetes Gerät, mit dem beispielsweise elektromagnetische Strahlung, insbesondere im sichtbaren Bereich, emittiert und durch einen Photodetektor, z. B. eine Photozelle, z. B. nach erfolgter Reflektion auch wieder detektiert werden kann. Alternativ zu einer reflektiven Messung kann auch eine transmissive Messung vorgenommen werden. Der Leerstandssensor kann durch das geänderte Reflektions- oder Transmissionsverhalten des in der Förderleitung befindlichen Mediums im Unterschied zu dem Reflektions- oder Transmissionsverhalten von Luft auf einfache Weise feststellen, ob sich in der Förderleitung flüssiges Medium, also z. B. eine Prozesschemikalie, oder Luft befindet.

Entsprechend kann ein Leerstandssensor im Sinne der vorliegenden sehr einfach und preisgünstig ausgebildet sein. Er kann insbesondere deutlich preiswerter ausgebildet sein, als ein Durchflussmesser, und kann - insbesondere in Kooperation mit der Steuerung - zugleich sehr viel zuverlässiger Auskunft geben über die Leistungsfähigkeit der Pumpe und die Dosiervolumina.

Als Medium im Sinne der vorliegenden Erfindung wird jedes flüssige, im Rahmen eines Dosierprozesses zu verwendende Mittel, wie beispielsweise Klarspüler, Reinigungslösung, Waschmittel oder Bestandteil eines Waschmittels oder eines Reinigungsmittels, Wasser, Spülmittel etc., verstanden.

Gemäß der Erfindung ist der Leerstandssensor mit der Steuerung verbunden. Insbesondere kann die Verbindung unmittelbar unter Zuhilfenahme eines elektrischen Kabels bewerkstelligt sein. Infolge einer Detektion eines Leerstandes kann der Leerstandssensor ein Leerstandssignal an die Steuerung übermitteln. Das Leerstandssignal kann beispielsweise in analoger oder digitaler Form übermittelt werden.

Die Steuerung kann dieses Signal empfangen, und verarbeiten. Nach Erhalt eines Leerstandssignals kann die Steuerung beispielsweise ein Warnsignal generieren, oder eine Information über die Förderfähigkeit oder Förderleistung der Pumpe ermitteln. Die Steuerung kann diese Information später bei Dosierprozessen berücksichtigen.

Gemäß einer vorteilhaften Ausgestaltung der Erfindung ist der Leerstandssensor ein optischer Sensor. Dies ermöglicht eine besonders einfache Konstruktion eines Leerstandssensors und einen Rückgriff auf kommerziell erhältliche Bauteile.

Gemäß einer vorteilhaften Ausgestaltung der Erfindung weist die Dosiereinrichtung mehrere Einlässe auf, die jeweils schaltbar, unter Zuhilfenahme eines ersten verlagerbaren Stellglieds, in kommunikative Verbindung mit wenigstens einem Auslass bringbar sind. Bei dieser Ausgestaltung der Erfindung kann ein Stellglied von einem Motor - ebenfalls von der Steuerung initiiert - angesprochen werden, und dafür sorgen, dass unterschiedliche Prozesschemikalien - insbesondere sukzessive - dem Auslass oder jeweils einem von mehreren Auslässen, zugeführt werden. Die Dosiereinrichtung kann beispielsweise eine Mischverteilereinrichtung aufweisen, wie sie in der deutschen Patentanmeldung DE 10 2011 122 921.7 A1 und in der DE 10 2012 012 913.0 A1, beide auf die Anmelderinnen lautend, beschrieben sind. Mit dieser Ausgestaltung der Erfindung besteht ein besonderer Vorteil darin, dass einer der Einlässe der Dosiereinrichtung dauerhaft und/oder fest und/oder permanent mit einem Depot mit einem vorherbestimmten, genau definierten, Depotvolumen verbunden ist. So kann die Dosiereinrichtung im Rahmen eines Kalibriervorganges das Stellglied in eine Stellposition verlagern, in der es mit dem Depot verbunden ist. Die Steuerung kann sodann eine Förderung des in dem Depot befindlichen Depotvolumens veranlassen, und beispielsweise die Zeitdauer messen, bis zu der der Leerstandssensor einen Leerstand detektiert. Dann kann die gemessene Zeit als Maß für die Förderfähigkeit oder die Förderleistung der Pumpe dienen, und später, bei nachfolgenden Dosierprozessen berücksichtigt werden.

Gemäß einer alternativen Ausgestaltung der Erfindung weist die Dosiereinrichtung mehrere Auslässe auf, die unter Zuhilfenahme eines zweiten verlagerbaren Stellgliedes jeweils schaltbar in kommunikative Verbindung mit dem wenigstens einen Einlass bringbar sind. Hier besteht die Möglichkeit, ein Medium oder mehrere Medien von einem Einlass zu einem wählbaren Auslass zu fördern.

Gemäß einer weiteren vorteilhaften Ausgestaltung der Erfindung weist die Dosiereinrichtung zwei in Reihe geschaltete Stellglieder auf. Hierdurch kann eine geometrische Anordnung getroffen werden, bei der kaskadenartig eine Vielzahl von Einlässen jeweils auf der Eingangsseite der Dosiereinrichtung angeordnet sind, und auf der Ausgangsseite der Dosiereinrichtung nur ein Auslass angeordnet ist. Bei dieser Ausgestaltung der Erfindung ist vorteilhafterweise der Leerstandssensor stromabwärts des Auslasses angeordnet. Alternativ sind von dieser Ausführungsform auch Dosiereinrichtungen umfasst, bei der die Stellglieder in einer geometrisch invertierten Anordnung aufeinander zugerichtet sind, derart, dass das erste Stellglied jeweils schaltbar eine Mehrzahl von Einlässen mit einem Ausgang, und das zweite Stellglied jeweils einen einzigen Eingang mit einem einer Vielzahl von Ausgängen verbindet. Hier kann der Leerstandssensor vorteilhafterweise zwischen den beiden Stellgliedern angeordnet sein.

Gemäß einer weiteren vorteilhaften Ausgestaltung der Erfindung ist der Dosiereinrichtung ein Depot mit einem definierten Depotvolumen zugeordnet. Beispielsweise kann das Depot ein Depotvolumen von 250 ml aufweisen, und der Aufnahme von Wasser dienen. Wasser wird ohnehin häufig bei Dosierprozessen benötigt, sei es als Spülmittel zur Spülung der Leitungswege, oder sei es für den Wasch- oder Reinigungsprozess an sich.

Das Depot ist vorteilhafterweise nach Entleerung wieder auffüllbar. Ein solcher Wiederauffüllvorgang kann durch die Steuerung ebenfalls initiiert werden.

Das definierte Depotvolumen ermöglicht eine Kalibrierung der Dosiereinrichtung. Die Steuerung weiß nämlich exakt, welches Volumen, also welche Menge an Medium, in dem Depot enthalten ist, und im Zuge eines Kalibriervorganges auch zwingend gefördert werden muss. Wenn die Dosiereinrichtung eines Förderprozess initiiert, und die Steuerung den Beginn dieses Fördervorganges festhält, und die Zeit misst, bis zu der ein Leerstandssensor ein Leerstandssignal generiert und an die Steuerung übermittelt, kann die Steuerung aus dieser Zeitdauer heraus die Förderleistung der Pumpe exakt bestimmen. Damit ist es beispielsweise möglich, äußere Einflüsse wie Temperatureinflüsse, bzw. nachfolgende Dosierprozesse zu kompensieren. Auch alterungsbedingte Einflüsse, wie beispielsweise eine Alterung von Schläuchen, die als Förderleitung eingesetzt werden, können kompensiert werden.

Die Steuerung kann auf diese Weise exakte Informationen über die Leistungsfähigkeit der Pumpe erhalten, und diese Informationen bei nachfolgenden Dosierprozessen berücksichtigen. Die Dosiereinrichtung kann auf diese Weise in höchstem Maße exakt und präzise auch kleine Dosiervolumina dosieren.

Gemäß einer vorteilhaften Ausgestaltung der Erfindung ist das Depot der Dosiereinrichtung fest zugeordnet. Das Depot kann beispielsweise fest an der Dosiereinrichtung angeordnet sein, oder fest mit dieser verbunden sein, oder an einem Zielgerät fest angeordnet sein. Die Anordnung des Depots hängt mit der Art der Dosiereinrichtung zusammen. So sind beispielsweise Dosiereinrichtungen von der Erfindung umfasst, die als integrale Bestandteile von Waschmaschinen oder Spülmaschinen vorgesehen sind. Hier wird in der Regel das Depot Bestandteil des Zielgerätes sein. Von der Erfindung sind aber auch Dosiereinrichtungen umfasst, die extern des Zielgerätes, also außerhalb einer Waschmaschine, oder einer Spülmaschine, angeordnet sind. Hier können Vorteile entstehen, wenn das Depot von einem von dem Zielgerät gesondert angeordneten Behältnis bereitgestellt ist.

Gemäß einer vorteilhaften Ausgestaltung der Erfindung ist das Depot an eine Rohrtrenneinrichtung angeschlossen. Dies ermöglicht eine besonders einfache Versorgung des Depots mit Wasser und eine einfache Wiederbefüllung des Depots.

Gemäß einer weiteren vorteilhaften Ausgestaltung der Erfindung ist das Depot mit Wasser befüllbar.

Gemäß einer weiteren vorteilhaften Ausgestaltung der Erfindung kooperiert das Depot mit einer Einrichtung zur Niveaustandsregelung. Eine Einrichtung zur Niveaustandsregelung kann beispielsweise ein Niveau in einem Behältnis feststellen. Beispielsweise kann - stromabwärts einer Rohrtrenneinrichtung - ein Behältnis angeordnet sein, welches einen bestimmten Füllstand erkennen kann, und bei Erreichen des Füllstandes ein Ventil einer Wasserleitung sperren kann. Auch hier weist dieses Depot eine definierte Menge an Wasser auf, und kann zur Kalibrierung der Dosiereinrichtung verwendet werden.

Gemäß einer weiteren vorteilhaften Ausgestaltung der Erfindung weist die Dosiereinrichtung mehrere Einlässe auf, die unter Zuhilfenahme eines ersten verlagerbaren Stellgliedes jeweils schaltbar in kommunikative Verbindung mit dem wenigstens einen Auslass bringbar sind, wobei weiter vorgesehen ist, dass einer der Einlässe fest mit dem Depot verbunden ist.

Gemäß einer weiteren vorteilhaften Ausgestaltung der Erfindung erkennt die Steuerung infolge des Erhaltes eines Leerstandssignals einen Vorratsmangel an einer Prozesschemikalie. Insbesondere bei Ausführungsformen von Dosiereinrichtungen, bei denen an die Dosiereinrichtung eine Vielzahl unterschiedlicher Behältnisse mit unterschiedlichen Prozesschemikalien angebunden sind, kann die Anordnung eines Leerstandssensors und das Generieren eines Leerstandssignals der Steuerung signalisieren, dass an einer bestimmten Prozesschemikalie ein Vorratsmangel aufgetreten ist. Infolge des Erhaltes eines Leerstandssignals kann die Steuerung sodann ein Warnsignal generieren. Dieses Warnsignal kann beispielsweise einer Bedienperson akustisch oder optisch anzeigen, dass die entsprechende Prozesschemikalie zur Neige gegangen ist, und eine Nachbestellung erforderlich ist. Ein solches Warnsignal kann auch an ein externes Gerät, beispielsweise drahtlos, übermittelt werden, und ggf. auch einen automatischen Bestellvorgang dieser Prozesschemikalie auslösen.

Gemäß einer weiteren vorteilhaften Ausgestaltung der Erfindung generiert die Steuerung infolge des Erhalts eines Leerstandsignals ein Warnsignal.

Gemäß der Erfindung ermittelt die Steuerung nach Erhalt eines Leerstandssignals eine Information über die Förderleistung der Pumpe. Beispielsweise kann die Steuerung infolge der Zeitdauer, die detektiert worden ist, um das gesamte Depotvolumen zu fördern, mittelbar oder unmittelbar ermitteln, welche Förderleistung die Pumpe aufweist.

Diese Information kann von der Steuerung zur Durchführung eines Dosierprozesses berücksichtigt werden. Beispielsweise können auf diese Weise unterschiedliche Umgebungstemperaturen oder Alterungseinflüsse wie z. B. eine Alterung der Kunststoffschläuche, die als Förderleitung fungieren, kompensiert oder ausgeglichen werden. Diese Information kann auch in einem Speicher der Dosiereinrichtung gespeichert werden.

Gemäß einer weiteren vorteilhaften Ausgestaltung der Erfindung ist die Pumpe als Schlauchpumpe ausgebildet. Dies ermöglicht einen Rückgriff auf herkömmliche, bekannte Bauteile und Elemente.

Die Erfindung betrifft gemäß einem weiteren Aspekt ein Verfahren nach Anspruch 10.

Dieser Erfindung liegt die Aufgabe zugrunde, ein Verfahren anzugeben, mit dem das Betreiben einer Dosiereinrichtung verbessert werden kann.

Die Erfindung löst diese Aufgabe mit den Merkmalen des Anspruches 10.

Zur Vermeidung von Wiederholungen wird auf die oben, zu der Dosiereinrichtung beschriebenen Vorteile und das Verständnis der Merkmale zurückgegriffen.

Gemäß einer vorteilhaften Ausgestaltung dieser Erfindung weist das Verfahren nach Anspruch 10 den folgenden Schritt auf:
d) Generieren eines Warnsignals.

Gemäß einer weiteren vorteilhaften Ausgestaltung der Erfindung ist vorgesehen, dass bei dem Verfahren die Schritte a), b) und e) regelmäßig durchgeführt werden.

Weitere Vorteile der Erfindung ergeben sich aus den nicht zitierten Unteransprüchen, sowie anhand der nachfolgenden Beschreibung der in den Figuren dargestellten Ausführungsbeispiele. Darin zeigen
- Fig. 1: in einer teilgeschnitten, schematischen Ansicht ein erstes Ausführungsbeispiel einer erfindungsgemäßen Dosiereinrichtung in einer blockschaltbildartigen Darstellung,
- Fig. 2: schematisch ein weiteres Ausführungsbeispiel einer erfindungsgemäßen Dosiereinrichtung mit drei Einlässen und einem als Waschmaschine ausgebildeten Zielgerät,
- Fig. 3: schematisch ein weiteres Ausführungsbeispiel einer erfindungsgemäßen Dosiereinrichtung mit zwei Mischverteilereinrichtungen, drei Einlässen und drei Auslässen und zwei dargestellten Zielgeräten, und
- Fig. 4: in einer Darstellung gemäß Fig. 1 ein weiteres Ausführungsbeispiel der erfindungsgemäßen Dosiereinrichtung mit einem Depot.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

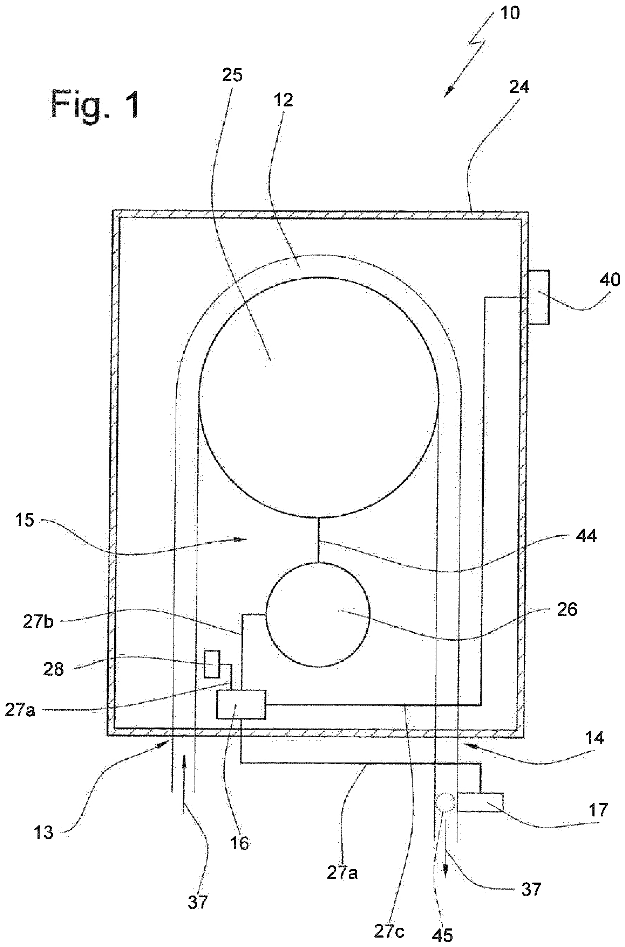

Ausweislich des ersten Ausführungsbeispiels der Fig. 1 weist eine erfindungsgemäße Dosiereinrichtung, die in ihrer Gesamtheit insgesamt mit 10 bezeichnet ist, ein Gehäuse 24 auf. Die Dosiereinrichtung 10 der Fig. 1 umfasst einen Einlass 13 und einen Auslass 14, zwischen denen eine komprimierbare Förderleitung 12 zum Fördern eines in Fig. 1 nicht dargestellten Mediums verläuft. Die Förderleitung 12 ist bei dem Ausführungsbeispiel als Schlauch ausgebildet, insbesondere als flexibler, komprimierbarer Kunststoffschlauch, wie dies bei Schlauchpumpen der in Fig. 1 dargestellten Art üblich ist. Die Schlauchpumpe 15 der Fig. 1 weist einen in Fig. 1 nur schematisch dargestellten Rotor 25, der von einem Motor 26 angetrieben wird.

Eine Steuerung 16 ist über eine schematisch angedeutete Leitung 27d mit einem Speicher 28 verbunden, und über eine Steuerleitung 27b mit dem Motor 26 verbunden. Die Steuerung 16 kann den Motor 26 über die Steuerleitung 27b ansprechen.

Zwischen dem Motor 26 und dem Rotor 25 befindet sich ein Element 44 zur Bewerkstelligung eines Drehschlusses, beispielsweise ein Zahnriemen, ein Gurt, ein Getriebe, ein Gestänge, oder dergleichen.

Die Dosiereinrichtung 10 der Fig. 1 dient dazu, ein Medium von dem Einlass 13 in Förderrichtung 37 zu dem Auslass 14 hin zu fördern.

Bezüglich des detaillierten Aufbaus einer eine Schlauchpumpe bereitstellenden Dosiereinrichtung 10 der in Fig. 1 dargestellten Art wird zur Vermeidung von Wiederholungen auf die auf die Anmelder zurückgehende deutsche Patentanmeldung DE 10 2013 008 973 A1 verwiesen, deren Inhalt hiermit in den Inhalt der vorliegenden Patentanmeldung mit eingeschlossen wird.

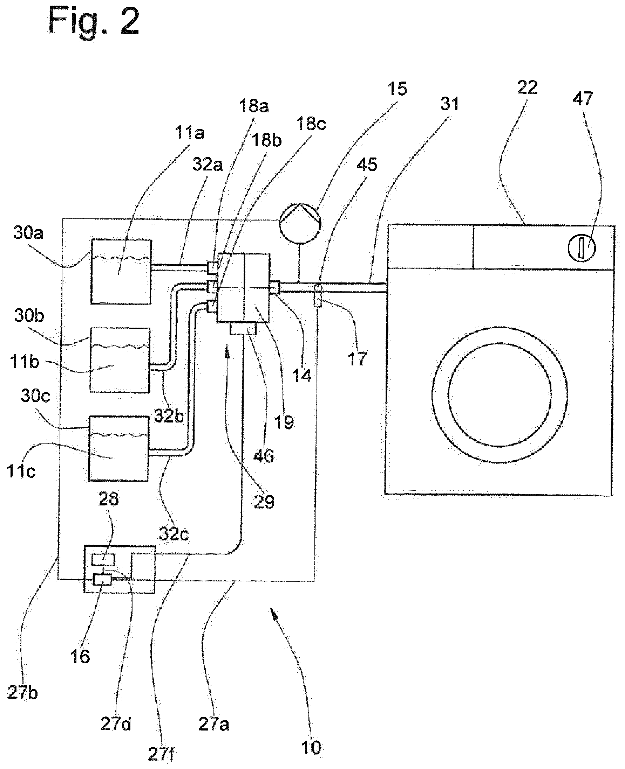

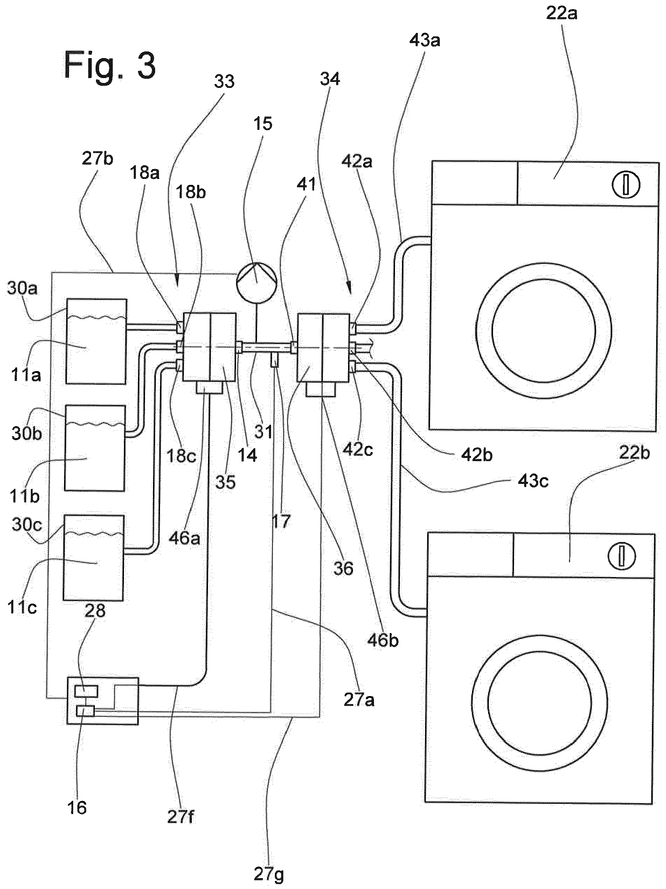

Der Eingang 13 der Dosiereinrichtung 10 der Fig. 1 wird beispielsweise fest mit einem nicht dargestellten Behältnis verbunden, in dem eine Prozesschemikalie angeordnet ist. Der Eingang 13 kann allerdings alternativ auch schaltbar mit jeweils einem von mehreren Behältnissen durch Verlagerung eines Stellgliedes einer Mischverteilereinrichtung, wie in Fig. 2 und Fig. 3 gezeigt, kommunikativ in Verbindung gebracht werden.

Der Auslass 14 der Dosiereinrichtung 10 der Fig. 1 kann mit einem nicht dargestellten Zielgefäß, z. B. mit einer Spülmaschine, verbunden werden.

Ausweislich Fig. 1 ist unmittelbar stromabwärts - bezogen auf die Förderrichtung 37 - der Pumpe 15 ein Leerstandssensor 17 angeordnet. Dieser ist über eine Steuerleitung 27a mit der Steuerung 16 verbunden.

Der Leerstandssensor 17 ist in Fig. 1 nur blockschaltbildartig dargestellt. Er ist als Detektor ausgebildet, der eine Anwesenheit bzw. eine Abwesenheit von flüssigem Medium in der Förderleitung 12 in seinem Erfassungsbereich 45 feststellen kann.

Der Erfassungsbereich 45 ist in Fig. 1 lediglich schematisch als Raumanteil innerhalb der Förderleitung 12, unmittelbar benachbart des Leerstandssensors 17, dargestellt. Der Erfassungsbereich 45 kann bei einem Ausführungsbeispiel der Erfindung auch kleiner oder größer als in Fig. 1 dargestellt, ausgebildet sein.

Der Leerstandssensor 17 kann beispielsweise elektromagnetische Strahlung, z. B. im sichtbaren Bereich, oder im Infrarot- oder UV-Bereich emittieren. Er umfasst bei einigen Ausführungsbeispielen auch eine Empfangseinrichtung, mit der das emittierte Licht, entweder nach Reflektion an Abschnitten der Förderleitung, oder an dem in der Förderleitung befindlichen Medium, oder infolge einer Transmission durch die Förderleitung - und das Medium - hindurch detektiert werden kann.

Für den Fall, dass sich im Erfassungsbereich 45 der Förderleitung 12 ein Leerstand befindet, also eine Abwesenheit von Medium detektiert wird, befindet sich Luft in der Förderleitung. Das zu fördernde Medium ist ansonsten flüssig.

Die Brechungsindizes zwischen Flüssigkeiten und Luft unterscheiden sich stark. Der Leerstandssensor 17 ist in der Lage, diese deutlichen Unterschiede in den Brechungsindizes aufgrund unterschiedlicher Reflektions- oder Transmissionseigenschaften elektromagnetischer Strahlung durch die Förderleitung 12 hindurch, insbesondere entlang des Erfassungsbereiches 45, zu detektieren. Hierdurch kann auf denkbar einfache Weise festgestellt werden, ob die Förderleitung 12 im Erfassungsbereich 45 mit Medium angefüllt ist, oder leer ist.

Angemerkt sei, dass der Leerstandssensor alternativ auch ein kapazitiver oder ein induktiver Sensor sein kann. Auch besteht die Möglichkeit, unter Zuhilfenahme von Ultraschallwellen die Anwesenheit bzw. Abwesenheit eines flüssigen Mediums festzustellen.

Die Steuerung 16 kann den Leerstandssensor 17 periodisch oder permanent bezüglich seines Status abfragen. Alternativ kann der Leerstandssensor 17 so ausgebildet sein, dass er von sich aus ein Leerstandssignal generiert, und an die Steuerung 16 mitteilt, wenn ein Leerstand festgestellt wird.

Der Leerstandssensor 17 kann - was in Fig. 1 aus Gründen der Übersichtlichkeit nicht dargestellt ist - über die Steuerung 16 auch mit Betriebsspannung versorgt werden. Bei anderen Ausführungsbeispielen kann der Leerstandssensor 17 auch eine eigene Spannungsversorgung aufweisen.

Die Spannungsversorgungsleitungen der Dosiereinrichtung 10 sind in Fig. 1 aus Gründen der Übersichtlichkeit ebenfalls nicht dargestellt. Dem Fachmann ist deutlich, dass die Dosiereinrichtung 10 üblicherweise mit einer Netzleitung verbunden ist.

Nach Erhalt einer Information über ermittelten Leerstand von dem Leerstandssensor 17 kann die Steuerung 16 - je nach Ausgestaltung der Dosiereinrichtung 10 - unterschiedliche Aktionen veranlassen. Beispielsweise ist von der Erfindung umfasst, wenn die Steuerung 16 ein Warnsignal generiert, das beispielsweise einer Bedienperson der Dosiereinrichtung 10 unmittelbar oder mittelbar signalisiert, oder ggf. auch elektronisch, z. B. drahtlos, kommuniziert, an eine Zentrale, die auch distanziert angeordnet sein kann, darüber unterrichtet, dass ein Leerstand aufgetreten ist. Damit kann auch eine Information an eine Bedienperson oder an eine Zentrale eines Systems übermittelt werden, dass eine bestimmte Prozesschemikalie zu Neige gegangen ist, und nachbestellt oder ausgetauscht werden muss.

Die Dosiereinrichtung 10 der Fig. 1 weist einen Relaisanschluss 40 auf, der über eine Steuerleitung 27c mit der Steuerung 16 verbunden ist. Bei dieser Dosiereinrichtung 10 ist vorgesehen, dass die Steuerung 16 von einem Zielgerät, das an den Relaisanschluss 40 angeschlossen ist, Steuersignale erhält. Gemäß Fig. 1 ist die Dosiereinrichtung 10 also als ein Anbaugerät ausgebildet.

Andere, nicht dargestellte Ausführungsbeispiele von der erfindungsgemäßen Dosiereireinrichtung, die im Übrigen aber - bis auf den Relaisanschluss - praktisch identisch ausgebildet sein können, wie in Fig. 1 dargestellt, können in ein Zielgerät integriert sein, oder gänzlich extern eines Zielgerätes angeordnet sein, und mit diesem lediglich über Steuerleitungen und/oder Förderleitungen für das Medium verbunden sein.

Ausweislich des Ausführungsbeispiels der Fig. 2 weist die Dosiereinrichtung 10 mehrere Komponenten auf, nämlich insbesondere einen Mischverteiler 29, eine Pumpe 15, einen Leerstandssensor 17, und eine Steuerung 16, die dort als nicht gemeinsam in einem Gehäuse untergebracht dargestellt sind. Dennoch können auch bei den Ausführungsbeispielen der Fig. 2 und 3 all diese Komponenten innerhalb eines Gehäuses angeordnet sein. Dieses ist aber nicht zwingend erforderlich.

Die Dosiereinrichtung 10 der Fig. 2 umfasst eine Mischverteilereinrichtung 29, die drei Einlässe 18a, 18b, 18c und einen Auslass 14 unter Zuhilfenahme eines drehbaren Stellgliedes 19 jeweils schaltbar miteinander verbindet. Bezüglich der Wirkungsweise einer solchen Mischverteilereinrichtung 19 wird zur Vermeidung von Wiederholungen auf die europäische Patentanmeldung EP 12846800 A1 der Anmelderin hingewiesen, deren Inhalt hiermit zur Vermeidung von Wiederholungen in den Inhalt der vorliegenden Patentanmeldung mit eingeschlossen wird.

Das Stellglied 19 ist von einem Stellgliedmotor 46 verlagerbar. In den unterschiedlichen Drehpositionen des Stellgliedes ist jeweils einer der drei Einlässe 18a, 18b, 18c mit dem Ausgang 14 kommunikativ verbunden.

Der Stellgliedmotor 46 ist über eine Steuerleitung 27f von der Steuerung 16 ansprechbar.

Gleichermaßen ist eine stromabwärts des Auslasses 14 der Mischverteilereinrichtung 29 angeordnete Pumpe 15 über eine Steuerleitung 27b von der Steuerung 16 ansprechbar.

Wie schon bei dem Ausführungsbeispiel der Fig. 1 ist der Steuerung 16 über eine Steuerleitung 27d ein Speicher 28 zugeordnet, in dem Dosierparameter wie Dosierprogramme, Dosierinformationen etc. gespeichert werden können.

Jeweils einer der drei Einlässe 18a, 18b, 18c ist über eine Zuleitung 32a, 32b, 32c mit einem Gefäß oder Behältnis 30a, 30b, 30c verbunden, in dem unterschiedliche Medien 11a, 11b, 11c angeordnet sein können.

Der Ausgang 14 der Mischverteilereinrichtung 29 ist über eine Ausgangsleitung 31 mit einem als Textilwaschmaschine ausgebildeten Zielgefäß 22 verbunden.

Diese Waschmaschine 22 weist einen lediglich schematisch angedeuteten Programmwahlschalter 47 auf, mit dem unterschiedliche Waschprogramme eingestellt werden können. Je nach eingestelltem Waschprogramm benötigt die Waschmaschine unterschiedliche Waschmittelbestandteile zu unterschiedlichen Zeitpunkten. Die Steuerung 16 der Dosiereinrichtung 10 kann - was in Fig. 2 aus Übersichtlichkeitsgründen nicht dargestellt ist - mit dem Programmwahlschalter 47 bzw. einer in der Waschmaschine 22 angeordneten Waschmaschinensteuerung elektrisch verbunden sein. Die Steuerung 16 kann insoweit - infolge einer Einstellung des Programmwahlschalters 47 und einer Wahl des Waschprogrammes - die Anweisung erhalten, zu bestimmten Zeitpunkten bestimmte Waschmittelbestandteile, nämlich unterschiedliche Medien 11a, 11b, 11c aus den unterschiedlichen Behältnissen 30a, 30b, 30c zu vorherbestimmten Zeitpunkten zu fördern, und dem Zielgefäß 22 zukommen zu lassen.

Zur Initiierung eines Waschprogramms kann von der Steuerung 16 über die Steuerleitung 27f ein Signal an den Stellgliedmotor 46 übermittelt werden, infolge dessen dieser das Stellglied 19 verlagert, um einen der Einlässe 18a, 18b, 18c mit dem Auslass 14 zu verbinden. Sobald die gewünschte Kommunikation erreicht ist, kann die Steuerung 16 über die Steuerleitung 27b die Pumpe 15 ansteuern, und dafür sorgen, dass ein vorbestimmtes Volumen an dem ausgewählten Medium gefördert wird.

Der unmittelbar stromabwärts der Pumpe 15 angeordnete Leerstandssensor 17 kann detektieren, ob sich in dem Erfassungsbereich 45 ein Medium befindet, oder nicht. Detektiert der Leerstandssensor 17 eine Abwesenheit von Medien, also einen Leerstand, kann er über die Steuersignalleitung 27a an die Steuerung 16 ein entsprechendes Leerstandssignal übermitteln. Die Steuerung 16 weiß nun, dass das zuvor ausgewählte Gefäß offensichtlich entleert ist, und kann beispielsweise für eine Bedienperson ein Warnsignal generieren, welches die Bedienperson veranlasst, das Gefäß auszutauschen, oder nachzubestellen. Das Warnsignal kann beispielsweise akustisch oder optisch unmittelbar an der Dosiereinrichtung 10 einer Bedienperson übermittelt werden. Die Steuerung 16 kann aber auch veranlassen, dass eine entsprechende Information, z. B. unter Zuhilfenahme von Kommunikationsmodulen, wie GSM-Modul, WLAN, Internet-Anbindung oder dergleichen, an eine nicht dargestellte Zentrale eines Steuerungssystems übermittelt wird, und ein entsprechender Bestellvorgang oder ein Austauschvorgang des Gebindes automatisch ausgelöst wird.

Bei dem Ausführungsbeispiel der Fig. 3 kann zur Vermeidung von Wiederholungen auf die Ausführungen zu dem Ausführungsbeispiel der Fig. 2 teilweise zurückgegriffen werden.

Hier ist im Unterschied zu dem Ausführungsbeispiel der Fig. 2 eine erste Mischverteilereinrichtung 33 mit einem ersten Stellglied 35, und eine zweite Mischverteilereinrichtung 34 mit einem zweiten Stellglied 36 vorgesehen. Die beiden Mischverteilereinrichtungen sind geometrisch invertiert zueinander angeordnet, wie dies beispielsweise in Fig. 22 der EP 16020506 A1 beschrieben ist.

Im Unterschied zu dem Ausführungsbeispiel der Fig. 2 sind bei dem Ausführungsbeispiel der Dosiereinrichtung 10 der Fig. 3 an die Dosiereinrichtung 10 mehrere Zielbehältnisse 22a, 22b angeschlossen. Hierzu weist die Mischverteilereinrichtung 34 der Dosiereinrichtung 10 der Fig. 3 ausgangsseitig drei Ausgänge 42a, 42b, 42c auf, die jeweils über Ausgangsleitungen 43a, 43b, 43c mit unterschiedlichen Zielbehältnissen 22a, 22b verbunden sind.

Bei diesem komplex ausgebildeten Ausführungsbeispiel einer Dosiereinrichtung 10 ist lediglich eine einzige Pumpe 15 vorzusehen, die zwischen den beiden Mischverteilereinrichtungen 33, 34 angeordnet ist. Unmittelbar stromabwärts der Pumpe 15 ist wiederum ein Leerstandssensor 17 angeordnet. Es genügt also auch bei diesem Ausführungsbeispiel die Anordnung eines einzigen Leerstandssensors.

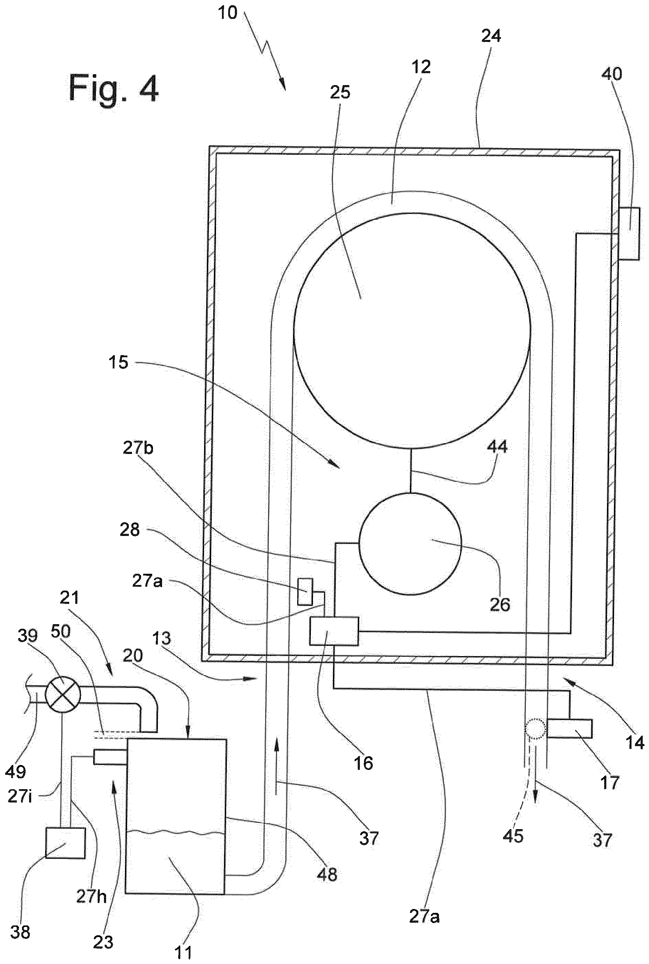

Ausweislich des Ausführungsbeispiels der Fig. 4 wird nun noch eine weitere erfindungsgemäße Besonderheit erläutert:
Das Ausführungsbeispiel der Fig. 4 entspricht dem Ausführungsbeispiel der Fig. 1, wobei zusätzlich ein Depot 20 mit einem vorherbestimmten, definierten Depotvolumen angeordnet worden ist. Das Depot 20 soll ausweislich des Ausführungsbeispiels der Fig. 4 von einem Gefäß 48 bereitgestellt werden, das der Aufnahme einer Flüssigkeit, insbesondere eines Spülmediums, insbesondere von Wasser, dient. Das Gefäß 48 kann beispielsweise ein vorherbestimmtes Depotvolumen von 250 ml aufweisen.

Das Depot 20 kann der Dosiereinrichtung 10 fest zugeordnet sein. Insbesondere kann das Depot 20 bei dem Ausführungsbeispiel der Fig. 3 von einem der drei Gefäße 30a, 30b, 30c gebildet sein.

Bei dem Ausführungsbeispiel der Fig. 4 ist das Depot 20 stromabwärts einer Rohrtrenneinrichtung 21 angeordnet. Die Rohrtrenneinrichtung 21 weist ein Ventil 39 auf, das mittels einer Steuerung 38 öffnenbar bzw. schließbar ist.

Die Leitung 29 stellt den Trinkwasseranschluss dar. Dieser kann durch das Ventil 39 geöffnet oder geschlossen werden. Über eine Freifallstrecke 50 kann bei geöffnetem Ventil 39 von dem Netzwasseranschluss 49 Wasser freifallend in das Gefäß 48 gelangen. Hierdurch wird eine Kontamination des Trinkwassers sicher vermieden.

Bei geöffnetem Ventil 39 kann das Gefäß 48 gefüllt werden, bis eine obere Niveaustandserkennungseinrichtung 23 feststellt, dass das Gefäß 48 bis zum gewünschten Maße gefüllt ist. Nach Erkennen des erreichten Füllstandes kann über die Signalleitung 27h die Steuerung 38 angesprochen werden, die nach Erhalt eines entsprechenden Signals über die Steuerleitung 27i das Ventil 39 anspricht und schließt. Nun ist das Depotvolumen in dem Gefäß exakt vorherbestimmt.

Die Steuerung 38 kann auch - was in Fig. 4 nicht dargestellt ist - mit der Steuerung 16 der Dosiereinrichtung der Fig. 4 verbunden sein.

Die Steuerung 16 kann nun einen Dosiervorgang veranlassen, und die Zeit messen, die die Pumpe 15 benötigt, um das Depotvolumen aus dem Depot 20 zu fördern. Die Zeitmessung endet, wenn der Leerstandssensor 17 ein Leerstandssignal generiert.

Alternativ zu einer Zeitmessung kann aber auch beispielsweise eine Messung der Umdrehungen des Rotors 25 der Schlauchpumpe 15 erfolgen. Auch andere Parameter der Förderbewegung könnten gemessen werden.

Im Folgenden soll aber beispielhaft die Zeitmessung im Fokus stehen:
Die Steuerung 16 kann aus der gemessenen Zeitdauer die Leistungsfähigkeit der Pumpe 15, also die Förderleistung, ermitteln, oder eine Information ermitteln, die in Bezug zu der Förderleistung steht. Auf diese Weise kann die Dosiereinrichtung 10 eine Selbst-Kalibrierung durchführen. Unabhängig von den verwendeten Komponenten, und von den die Elastizität des Schlauches 12 bestimmenden Faktoren, von der Stärke des Motors, von Verschleiß, von Korrosion oder dergleichen, kann die Steuerung 16 durch Ermittlung der Zeitdauer - oder im Falle einer Schlauchpumpe der Zahl der erforderlichen Umdrehungen eines Rotors - die Leistungsfähigkeit der Pumpe ermitteln, und auf diese Weise beispielsweise Faktoren wie unterschiedliche Umgebungstemperaturen, oder alterungsbedingten Verschleiß, insbesondere Schlauchalterungen, kompensieren. Die Dosiereinrichtung 10 kann auf diese Weise exakt und präzise die gewünschten Dosiervolumina fördern.

Die von der Steuerung 16 gewonnen Informationen über die Förderleistung der Pumpe können in einem Speicher 28 der Dosiereinrichtung 10 gespeichert werden. Auf den Inhalt dieses Speichers 28 kann nachfolgend bei Dosierprozessen zurückgegriffen werden.

Ein Depot 20, wie gemäß Fig. 4 dargestellt, kann wie beispielsweise den Ausführungsbeispielen der Fig. 2 und 3 entnehmbar, von einem der Gefäße 30a, 30b, 30c bereitgestellt sein. Wenn die Dosiereinrichtung 10 - auf Anforderung oder selbsttätig - einen Dosierungsvorgang durchführen soll, wird die entsprechende Mischverteilereinrichtung 29, 33, 34 derartig von der Steuerung 16 angesprochen, dass eine schaltbare kommunikative Verbindung zwischen dem Depot 20 und dem Ausgang 14 bewerkstelligt wird. Von der Steuerung 16 wird die Pumpe solange angesprochen, bis der Leerstandssensor 17 einen Leerstand an die Steuerung 16 melden kann.

Die Förderung des Depotvolumens, vorteilhafterweise von Wasser, kann vorteilhaft insoweit zu einem Zielgefäß hin zu einem Zeitpunkt erfolgen, zu dem die Förderung dieser Wassermenge für den Wasch- oder Reinigungsprozess unproblematisch ist, beispielsweise, weil ohnehin Wasser gefördert werden muss.

Die Dosiereinrichtung weiß nun, in welchem Maße sie förderfähig ist, bzw. welche Pumpen-Förderzeiten tatsächlich welche Volumina fördern können.

Bei nachfolgenden Dosierprozessen von Prozesschemikalien kann die Steuerung 16 diese Informationen berücksichtigen, und die Pumpe 15 entsprechend ansteuern.

Die erlangten Informationen über die Förderleistung der Pumpe 15 können in dem entsprechenden Speicher 28 der Dosiereinrichtung 10 abgelegt werden, und bei nachfolgenden Dosierprozessen kann auf diese Informationen zurückgegriffen werden.

Das Depot 20 mit einem vorherbestimmten Depotvolumen kann auch integraler Bestandteil des Innenraumes einer Waschmaschine oder einer Spülmaschine sein. So kann beispielsweise das Depot 20 im Zuge einer Befüllung des Spülraumes oder des Waschraumes des Zielgefäßes jedes Mal vollständig gefüllt werden und einen Überlauf umfassen. Auf diese Weise kann gewährleistet werden, dass bei einer Befüllung des Zielgerätes mit Wasser immer auch das Depot vollständig gefüllt wird, und die Dosiereinrichtung 10 insoweit immer auf ein genau definiertes Depotvolumen für Kalibrierungszwecke zurückgreifen kann.

## Patentansprüche

1. Dosiereinrichtung (10) mit einer Steuerung (16) und mit einer Pumpe (15) zum Fördern wenigstens eines Mediums (11a, 11b, 11c) entlang einer Förderleitung (12) von wenigstens einem Einlass (13, 18a, 18b, 18c) zu wenigstens einem Auslass (14, 42a, 42b, 42c) unter Zuhilfenahme der Pumpe (15), die von der Steuerung (16) ansprechbar ist, wobei stromabwärts der Pumpe ein Leerstandssensor (17) vorgesehen ist, mit dem ein Leerstand in der Förderleitung detektierbar ist, wobei der Leerstandssensor (17) mit der Steuerung (16) verbunden ist, und ausgebildet ist, infolge einer Detektion eines Leerstandes ein Leerstandsignal an die Steuerung (16) zu übermitteln, **dadurch gekennzeichnet, dass** die Steuerung ausgebildet ist, im Rahmen eines Kalibrierungsprozesses nach Erhalt eines Leerstandsignals
i) aus einer Messung einer Zeitdauer zwischen Beginn und Ende einer Förderung eines Depot-Volumens, oder
ii) aus der Messung einer Zahl der Umdrehungen eines Rotors einer Schlauchpumpe, oder
iii) aus der Messung eines anderen Parameters der Förderung des Depot-Volumens,
eine Information über die Förderleistung der Pumpe (15) zu ermitteln, wobei die Messung jeweils endet, wenn der Leerstandssensor (17) ein Leerstandssignal generiert.

2. Dosiereinrichtung nach Anspruch 1, **dadurch gekennzeichnet, dass** der Leerstandssensor (17) ein optischer Sensor ist.

3. Dosiereinrichtung nach einem der vorangegangenen Ansprüche, **dadurch gekennzeichnet, dass** der Leerstandssensor (17) unmittelbar benachbart der Pumpe (15) angeordnet ist.

4. Dosiereinrichtung nach einem der vorangegangenen Ansprüche, **dadurch gekennzeichnet, dass** der Dosiereinrichtung ein Depot (20) mit einem definierten Depotvolumen zugeordnet ist.

5. Dosiereinrichtung nach Anspruch 4, **dadurch gekennzeichnet, dass** das Depot (20) an einem Zielgerät (22), insbesondere in einer Spülmaschine, anordenbar ist.

6. Dosiereinrichtung nach einem der vorangegangen Ansprüche, **dadurch gekennzeichnet, dass** die Steuerung ausgebildet ist, infolge des Erhalts eines Leerstandsignals einen Vorratsmangel an einer Prozesschemikalie zu erkennen.

7. Dosiereinrichtung nach einem der vorangegangenen Ansprüche, **dadurch gekennzeichnet, dass** die Steuerung (16) nach der Ermittlung einer Information über die Förderleistung der Pumpe bei der Durchführung eines Dosierprozesses diese Information über die Förderleistung der Pumpe berücksichtigt.

8. Dosiereinrichtung nach Anspruch 7, **dadurch gekennzeichnet, dass** die Steuerung ausgebildet ist, durch Berücksichtigung der Information über die Förderleistung der Pumpe (15) eine Alterung einer als Schlauch ausgebildeten Förderleitung (12) zu kompensieren.

9. Dosiereinrichtung nach einem der vorangegangenen Ansprüche, **dadurch gekennzeichnet, dass** die Pumpe (15) als Schlauchpumpe ausgebildet ist.

10. Verfahren zum Betreiben einer Dosiereinrichtung, umfassend die folgenden Schritte:
a) Fördern eines Mediums (11a, 11b, 11c) entlang einer Förderleitung (12) von einem Einlass (13, 18a, 18b, 18c) zu einem Auslass (14, 42a, 42b, 42c) unter Zuhilfenahme einer von einer Steuerung (16) ansprechbaren Pumpe (15),
b) Feststellen eines Leerstandes mittels eines Leerstandssensors (17) stromabwärts der Pumpe (15),
c) Übermitteln eines Leerstandsignals von dem Leerstandssensor (17) an die Steuerung (16),
**gekennzeichnet durch** den Schritt:
e) Ermitteln einer Information über die Förderleistung der Pumpe durch die Steuerung (16) im Rahmen eines Kalibrierungsprozesses nach Erhalt eines Leerstandsignals
i) aus einer Messung einer Zeitdauer zwischen Beginn und Ende einer Förderung eines Depot-Volumens, oder
ii) aus der Messung einer Zahl der Umdrehungen eines Rotors einer Schlauchpumpe, oder
iii) aus der Messung eines anderen Parameters der Förderung des Depot-Volumens,
wobei die Messung jeweils endet, wenn der Leerstandssensor (17) ein Leerstandssignal generiert.

11. Verfahren nach Anspruch 10, **gekennzeichnet durch** den Schritt:
f) Berücksichtigen der Information über die Förderleistung der Pumpe (15) durch die Steuerung (16) bei der Durchführung eines Dosierprozesses.

## Claims

1. Dosing device (10) having a controller (16) and having a pump (15) for feeding at least one medium (11a, 11b, 11c) along a feeding line (12) from at least one inlet (13, 18a, 18b, 18c) to at least one outlet (14, 42a, 42b, 42c) with the assistance of the pump (15), which can respond to the controller (16), wherein the pump is provided with a vacancy sensor (17) downstream by which a vacancy in the feeding line can be detected, wherein the vacancy sensor (17) is connected to the controller (16), and is designed to relay a vacancy signal to the controller (16) when it detects a vacancy, **characterised in that** the controller is designed, during a calibration process after receiving a vacancy signal, to determine information about the feeding power of the pump (15)
i) from a measurement of a duration between the beginning and end of a feeding of a deposit volume, or
ii) from the measurement of a number of the rotations of a rotor of a peristaltic pump, or
iii) from the measurement of a different parameter of the feeding of the deposit volume,
wherein the measurement ends in each case when the vacancy sensor (17) generates a vacancy signal.

2. Dosing device according to claim 1, **characterised in that** the vacancy sensor (17) is an optical sensor.

3. Dosing device according to one of the preceding claims, **characterised in that** the vacancy sensor (17) is arranged immediately neighbouring the pump (15).

4. Dosing device according to one of the preceding claims, **characterised in that** the dosing device is assigned to a deposit (20) having a defined deposit volume.

5. Dosing device according to claim 4, **characterised in that** the deposit (20) can be arranged on a target device (22), in particular in a dishwasher.

6. Dosing device according to one of the preceding claims, **characterised in that** the controller is designed to recognise, as a result of receiving a vacancy signal, a lack of supply of a process chemical.

7. Dosing device according to one of the preceding claims, **characterised in that** the controller (16) takes into account information about the feeding power of the pump when carrying out a dosing process after this information about the feeding power of the pump is determined.

8. Dosing device according to claim 7, **characterised in that** the controller is designed to compensate for an aging of a feeding line (12) embodied as a tube by taking into account the information about the feeding line of the pump (15).

9. Dosing device according to one of the preceding claims, **characterised in that** the pump (15) is embodied as a peristaltic pump.

10. Method for operating a dosing device, comprising the following steps:
a) feeding a medium (11a, 11b, 11c) along a feeding line (12) from an inlet (13, 18a, 18b, 18c) to an outlet (14, 42a, 42b, 42c) with the assistance of a pump (15), which can respond to a controller (16),
b) determining a vacancy by means of a vacancy sensor (17) downstream of the pump (15),
c) relaying a vacancy signal from the vacancy sensor (17) to the controller (16),
**characterised by** the step:
e) determining information about the feeding power of the pump via the controller (16) during a calibration process after receiving a vacancy signal
i) from a measurement of a duration between the beginning and end of a feeding of a deposit volume, or
ii) from the measurement of a number of rotations of a rotor of a peristaltic pump, or
iii) from the measurement of a different parameter of the feeding of the deposit volume,
wherein the measurement ends in each case when the vacancy sensor (17) generates a vacancy signal.

11. Method according to claim 10, **characterised by** the step:
f) taking into account the information about the feeding power of the pump (15) via the controller (16) when carrying out a dosing process.

## Revendications

1. Dispositif de dosage (10) muni d'une commande (16) et comprenant une pompe (15) pour transporter au moins un fluide (11a, 11b, 11c) le long d'une conduite de transport (12) à partir d'au moins une entrée (13, 18a, 18b, 18c) jusqu'à au moins une sortie (14, 42a, 42b, 42c) par l'intermédiaire de la pompe (15), qui peut être activée par la commande (16), dans lequel un capteur d'état de vide (17) à l'aide duquel un état de vide peut être détecté à l'intérieur de la conduite de transport est prévu en aval de la pompe, le capteur d'état de vide (17) étant relié à la commande (16) et étant conçu de manière à transmettre un signal d'état de vide à la commande (16) à la suite de la détection d'un état de vide, **caractérisé en ce que** la commande est conçue, dans le cadre d'un processus de calibrage, après la réception d'un signal d'état de vide :
i) à partir de la mesure d'une période de temps entre le début et la fin du transport d'un volume de dépôt, ou
ii) à partir de la mesure d'un nombre de rotations du rotor d'une pompe péristaltique, ou
iii) à partir de la mesure d'un autre paramètre du pompage du volume de dépôt,
de manière à déterminer une information relative au débit de la pompe (15), la mesure s'arrêtant chaque fois que le capteur d'état de vide (17) génère un signal d'état de vide.

2. Dispositif de dosage selon la revendication 1, **caractérisé en ce que** le capteur d'état de vide (17) est un capteur optique.

3. Dispositif de dosage selon l'une quelconque des revendications précédentes, **caractérisé en ce que** le capteur d'état de vide (17) est disposé dans le voisinage immédiat de la pompe (15).

4. Dispositif de dosage selon l'une quelconque des revendications précédentes, **caractérisé en ce qu'**un dépôt (20) présentant un volume de dépôt défini est associé au dispositif de dosage.

5. Dispositif de dosage selon la revendication 4, **caractérisé en ce que** le dépôt (20) peut être disposé à l'intérieur d'un dispositif cible (22), en particulier à l'intérieur d'un lave-vaisselle.

6. Dispositif de dosage selon l'une quelconque des revendications précédentes, **caractérisé en ce que** la commande est configurée de manière à détecter une quantité manquante d'un produit chimique de traitement à la suite de la réception d'un signal d'état de vide.

7. Dispositif de dosage selon l'une quelconque des revendications précédentes, **caractérisé en ce que** la commande (16), après avoir déterminé une information relative au débit de la pompe, tient compte de cette information relative au débit de la pompe lors de la mise en œuvre d'un processus de dosage.

8. Dispositif de dosage selon la revendication 7, **caractérisé en ce que** la commande est configurée de manière à compenser un vieillissement d'une conduite de transport se présentant sous la forme d'un tuyau flexible (12) en prenant en considération l'information relative au débit de la pompe (15).

9. Dispositif de dosage selon l'une quelconque des revendications précédentes, **caractérisé en ce que** la pompe (15) est une pompe péristaltique.

10. Procédé de fonctionnement d'un dispositif de dosage, comprenant les étapes suivantes :
a) le transport d'un fluide (11a, 11b, 11c) le long d'une conduite de transport (12) à partir d'une entrée (13, 18a, 18b, 18c) jusqu'à une sortie (14, 42a, 42b, 42c) par l'intermédiaire d'une pompe (15) pouvant être activée par une commande (16),
b) la détection d'un état de vide à l'aide d'un capteur d'état de vide (17) qui est disposé en aval de la pompe (15), et
c) la transmission d'un signal d'état de vide par le capteur d'état de vide (17) à la commande (16),
**caractérisé par** l'étape suivante :
e) la détermination par la commande (16) d'une information relative au débit de la pompe dans le cadre d'un processus de calibrage après la réception d'un signal d'état de vide :
i) à partir de la mesure d'une période de temps entre le début et la fin du pompage d'un volume de dépôt, ou
ii) à partir de la mesure d'un nombre de rotations du rotor d'une pompe péristaltique, ou
iii) à partir de la mesure d'un autre paramètre du pompage du volume de dépôt,
la mesure s'arrêtant chaque fois que le capteur d'état de vide (17) génère un signal d'état de vide.

11. Procédé selon la revendication 10, **caractérisé par** l'étape suivante :
f) la prise en compte par la commande (16) de l'information relative au débit de la pompe (15) lors de la mise en œuvre d'un processus de dosage.
